# EUROPEAN PATENT SPECIFICATION

(11) **EP 2 524 307 B1**
(45) Date of publication and mention of the grant of the patent: **02.11.2016**
(21) Application number: 11733254.4
(22) Date of filing: 11.01.2011
(51) Int. Cl.: G06F 9/44, G06F 9/445

(54) **OPERATING SYSTEM AUTO-UPDATE PROCEDURE**
VERFAHREN ZUR AUTOMATISCHEN AKTUALISIERUNG EINES BETRIEBSSYSTEMS
PROCÉDÉ DE MISE À JOUR AUTOMATIQUE D'UN SYSTÈME D'EXPLOITATION

(30) Priority: 12.01.2010 US 294266 P
(43) Date of publication of application: 21.11.2012
(73) Proprietor: Google Inc., Mountain View, CA 94043 (US)
(72) Inventor: DE LOS REYES, Andrew, Redwood City CA 94061 (US)
(74) Representative: Betten & Resch
(86) International application number: PCT/US2011/020790
(87) International publication number: WO 2011/088022

(56) References cited:
- WO-A1-02/41147
- WO-A1-2004/031961
- US-A1- 2005 132 350
- US-A1- 2006 039 618
- US-A1- 2008 229 301
- US-A1- 2008 307 215
- US-A1- 2009 210 868
- US-A1- 2010 218 176

## Description

### CROSS-REFERENCE TO RELATED APPLICATION

The present application claims priority to United States Provisional Application No. 61/294,266, filed January 12, 2010, the entire disclosure of which is hereby incorporated by reference.

### BACKGROUND OF THE INVENTION

Software packages such as operating systems may be updated from time to time to introduce new features, correct errors and address security flaws. Due to file sizes for large applications, it may be inconvenient or inefficient to send and install an entirely new package with an update. One solution is to send a differential update to the client, which insert the covers only the specific changes from the prior software. If paragraph the differential update is not performed correctly, the software may operate poorly or not at all.

WO 2002/41147 A1 discloses efficient devices, systems, and methods for updating digital information sequences that are comprised by software, devices, and data. These digital information sequences may be stored and used in various forms, including files, memory locations, and/or embedded storage locations. The devices, systems, and methods of WO 2002/41147 A1 are thus suitable for updating many types of digital information sequences and in the context of updating software comprised of multiple files. Furthermore, the devices, systems, and methods of WO 2002/41147 A1 provide a developer skilled in the art with an improved ability to generate update information as needed and, additionally, allow users to proceed through a simplified update path, which is not error-prone, and may be performed more quickly.

### SUMMARY OF THE INVENTION

The present invention relates generally to operating systems. More particularly, embodiments of the present invention relates to updating the version of an operating system. The present invention is defined by the independent claims. Dependent claims specify advantageous embodiments thereof.

In accordance with one embodiment, a method of generating an update for a computer readable operating system is provided. The method comprises identifying a version number of a current version of the operating system; creating, with a processor, an ordered list of operations for updating the current version of the operating system to a new version of the operating system, the processor performing iterations over each regular file on the new version of the operating system to obtain the ordered list for all data blocks associated with the new version; and assembling, with the processor, a differential update file including a magic number indicator showing the differential update file is an actual update file, a new version number identifying the new version of the operating system, and a protocol buffer including the ordered list of operations.

In one example, one or more operations in the ordered list are each associated with a respective data blob indicating a chunk of data. Here, the differential update file is assembled to include the respective data blobs. In another example, each operation in the ordered list is applicable to one or more specific data blocks of a partition of a client device. The operations include one or more of: a copy operation where at least one of the data blocks in the partition is to be copied to another block in a new partition of the client device for the new version of the operating system; a difference operation where at least a given one of the data blocks is read into memory and a difference routine is performing on the at least one given data block using a data blob of the differential update file; a replace operation where a selected data blob of the differential update file is configured to be written to specified blocks in the new partition; and a replace with uncompression operation where a compressed data blob is included in the differential update file and is configured to be written to selected specified blocks in the new partition for the new version of the operating system.

In one alternative, each operation in the ordered list is associated with a file object, and the method further comprises creating a vertex in a graph for each file object; and creating a vector representing each block. In one variation, the method further comprises setting reader and writer parameters for the vector of each block; and for each block with a different reader and writer, creating an edge in the graph from the writer to the reader. The edge points to a file operation to be completed before a source file operation associated with the edge starts. In an example, each edge has a weight, and the weight identifies a number of blocks in the graph associated with that edge. In another example, if the graph includes cycles, the method further comprises breaking each of the cycles. In this case, breaking a given one of the cycles may include finding a lowest-weight edge associated with the given cycle; and cutting the lowest-weight edge. Here, cutting the lowest-weight edge may comprise creating a new node representing an operation of copying an extent to a scratch space; and making the lowest-weight edge's source node point to the new node. And a new edge may be made from a destination node of the lowest-weight edge in order to ensure that a new copy operation occurs before a consumer of the new copy operation.

In accordance with another embodiment, a device for generating an update for a computer readable operating system is provided. The device comprises memory for storing differential update information associated with the operating system, and a processor coupled to the memory. The processor is configured to identify a version number of a current version of the operating system; create, using the differential update information, an ordered list of operations for updating the current version of the operating system to a new version of the operating system, including performing iterations over each regular file on the new version of the operating system to obtain the ordered list for all data blocks associated with the new version; assemble a differential update file including a magic number indicator showing the differential update file is an actual update file, a new version number identifying the new version of the operating system, and a protocol buffer including the ordered list of operations; and store the differential update file in the memory.

In one example, each operation in the ordered list is associated with a file object, and the processor is further configured to create a vertex in a graph for each file object, and create a vector representing each block. In an alternative, the processor is further configured to set reader and writer parameters for the vector of each block; and for each block with a different reader and writer, create an edge in the graph from the writer to the reader. The edge points to a file operation to be completed before a source file operation associated with the edge starts. In this case, if the graph includes cycles, the processor is optionally operable to break each of the cycles. Here, breaking a given one of the cycles may include finding a lowest-weight edge associated with the given cycle, and cutting the lowest-weight edge. In this case, the processor may be operable to cut the lowest-weight edge by creating a new node representing an operation of copying an extent to a scratch space; and making the lowest-weight edge's source node point to the new node. And a new edge may be made from a destination node of the lowest-weight edge in order to ensure that a new copy operation occurs before a consumer of the new copy operation.

In a further embodiment, a tangible computer-readable storage medium stores computer readable instructions of a computer program. The instructions, when executed by a computer, cause the computer to perform a method of generating an update for a computer readable operating system. The method comprises identifying a version number of a current version of the operating system; creating, with a processor, an ordered list of operations for updating the current version of the operating system to a new version of the operating system, the processor performing iterations over each regular file on the new version of the operating system to obtain the ordered list for all data blocks associated with the new version; and assembling, with the processor, a differential update file including a magic number indicator showing the differential update file is an actual update file, a new version number identifying the new version of the operating system, and a protocol buffer including the ordered list of operations.

In one example, each operation in the ordered list is associated with a file object, and the method further comprises creating a vertex in a graph for each file object; and creating a vector representing each block. In this case, the method may further comprise setting reader and writer parameters for the vector of each block; and for each block with a different reader and writer, creating an edge in the graph from the writer to the reader. The edge points to a file operation to be completed before a source file operation associated with the edge starts. Here, if the graph includes cycles, the method may further comprise breaking each of the cycles by finding a lowest-weight edge associated with each given cycle; and cutting the lowest-weight edge for each cycle. Cutting the lowest-weight edge may include creating a new node representing an operation of copying an extent to a scratch space; and making the lowest-weight edge's source node point to the new node. And a new edge may be made from a destination node of the lowest-weight edge in order to ensure that a new copy operation occurs before a consumer of the new copy operation.

In a further embodiment, a client device comprises memory for storing a current version of an operating system and a processor coupled to the memory. The processor is configured to transmit a request to a remote device regarding an update for the current version of the operating system, the request including a version number identifying the current version of the operating system; receive a differential update file from the remote device, the differential update file including a magic number indicator showing the differential update file is an actual update file, a new version number identifying the new version of the operating system, and a protocol buffer including an ordered list of operations; verify the magic number; extract the ordered list of operations from the protocol buffer; and perform a differential update by executing the ordered list of operations in order to update the current version of the operating system to the new version of the operating system.

In one example, the processor is operable to perform the differential update of the operating system to the new version of the operating system without saving the differential update file in the memory while the differential update file is being streamed to the client device.

### BRIEF DESCRIPTION OF THE DRAWINGS

FIG. 1 illustrates a file format.
FIG. 2 is a process of for cutting edges to break cycles.
FIG. 3 illustrates a differential update process.
FIGS. 4A-B illustrate computer systems for use.

### DETAILED DESCRIPTION

The aspects, features and advantages of the present invention will be appreciated when considered with reference to the following description of preferred embodiments and accompanying figures. The same reference numbers in different drawings may identify the same or similar elements.

From time to time different features of an operating system are updated. Those updates may be sent to client computers that perform a predefined update process. This may involve deleting, changing and/or adding files to the client. In one process, an update is prepared by the operating system provider. This may include creating a differential update file, which indicates to the client what changes need to be made. The differential update file is then sent to each client to be updated. The clients desirably sequentially execute the operations in the file to perform the update.

A partition containing an operating system may be configured as one or more blocks, with each block containing file information or bookkeeping information. Each block may be, e.g., 4 kbytes, although the invention is not limited to this or any particular block size. The operating system itself comprises programs (e.g., instructions) as well as data that run on a computer processor and manages computer hardware resources and provides common services for efficient execution of various application software. When updating the operating system, a new partition may be created. The new partition is pre-populated with the old version of the operating system. Each disk block on the resultant install partition (which will contain the root file system) is desirably exactly (bit for bit) specified by the operating system vendor so that it can be signed on the server (e.g., for a verified boot).

It is desirable for updates to be as small as possible. In one scenario, the updates are applied in place, so that many delta (differential) updates can be installed without rebooting. Thus, if a user is booted into version N, and N+1 is released, the user (client) downloads the N→N+1 updated and installs it. Then the user is still booted into N when N+2 comes out. The user then downloads the N+1→N+2 update and installs it in-place over N+1.

In one example, the client contacts the update server and provides the version number of the system installed on the present install partition. The server provides the client with an incremental (delta) update that is downloaded to the client. The delta update file contains an ordered list of operations to perform on the install partition that will take it from the old (existing) version to the new version.

Desirably, the update file is an ordered list of operations to be performed by the client. Each operation operates on specific blocks of the partition. Each operation may contain an optional data "blob" inside the delta file. The term "blob" indicates a large chunk of data that may have an arbitrary collection of bytes. There are several types of install operations, including "Copy," "Diff", "Replace" and "Replace with Uncompression." In Copy, some of the blocks in the current install partition are copied over to other blocks in the new install partition. For Diff, some blocks are read into memory, and a binary difference routine is performed using an attached data blob. The results are written into specified blocks in the new install partition. For Replace, the attached data blob is written to specified blocks in the new install partition. A compression process may also be performed, where a compressed data blob is sent to the client, uncompressed, and the results are written to specified blocks in the new install partition. Here, Gzip, Bzip2 or another compression algorithm may be employed.

In one scenario, a patch program is instructed that the old file is the install partition. Rather than having the program read the entire partition into memory, it is instructed which blocks to read to get the file in memory. Then, a patch operation is performed in memory. Finally, the result is written directly to the new install partition, but not at the beginning of the device. Instead, the program is told which blocks to write the results to.

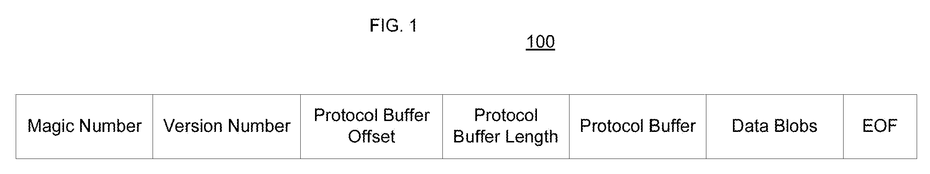

A delta/differential update file may be generated according to the following discussion. The update file format may be as shown in file format 100 of FIG. 1. Specifically, the format preferably includes a "magic number" indicator or sanity check to show the file is actually an update file. In one instance, the magic number includes four bytes containing the binary version of a short phrase, such as "CrAU." Next is a version number, followed by a protocol buffer offset and length, each of which may be 8 bytes. The protocol buffer itself follows. The protocol buffer is a series of instructions that the client is to perform in order. Next, one or more data blobs are provided, followed by an end of file (EOF) indicator. While the ordering may be as shown in this figure, the different components may be ordered differently if desired.

In one scenario, the concept of an "extent" is employed. An extent is a contiguous range of disk blocks. For example, rather than specify blocks {10, 11, 12, 13, 14, 15, 17, 18} it can be simpler to specify { (10, 6), (17, 2) } (a list of extents). An exemplary process for generating delta updates is as follows.

```
    message Manifest {
    message InstallOperation {
      enum CompressionType {
        NO_CHANGE = 0, // file is unchanged; just move data
          blocks
        BSDIFF = 1, // Read source data blocks as old file,
          included binary blob is diff, output to new blocks
        FULL = 2, // Output included binary blob to new
          blocks
        FULL_BZIP = 3 // Bunzip binary blob into new blocks
    }
      uint64 blob_offset; // if present, the offset in the
         update image of the binary blob for this file
      uint64 blob_length; // if present, binary blob length
         message extent {
         uint64 offset; // in blocksize
         uint64 length; // in blocksize
    }
      repeated extent input_extents;
      repeated extent output_extents;
    }
    repeated InstallOperation install_operations;
    }
```

The manifest indicates a list of install operations. Input extents indicate blocks to be read. Output extents indicate blocks to be written.

To generate a delta update, iterations are performed over each regular file on the new file system to obtain an ordered list of all data blocks it has. This is stored in a file structure having the following format:

```
    struct Extent {
    uint64 start;
    uint64 length;
    }
    struct File {
      string path; // path within the filesystem
      vector<Extent> dst_extents; // ordered list of all
      extents on the new filesystem
      vector<Extent> src_extents; // Applies only for
      NO_CHANGE and BSDIFF
      enum CompressionType; // one of: NO_CHANGE, BSDIFF,
      FULL, FULL_BZIP
    }
```

Eventually, each file object will be converted into an InstallOperation message in the protocol buffer. For each file, it is desirable to determine the optimal way to compress it. There are four cases. In one case, the file hasn't changed. In the other three cases, the file has changed. In one scenario, the changed file can be compressed to the smallest size using Bzip2 or another compression algorithm. In another scenario, the file has changed and it is smallest uncompressed. In the third scenario, the file has changed and it binary-diffs the smallest. If a file is new, meaning that it was not present in the old version of the operating system, then only two of the cases apply. The data may be sent down in full, or sent down in full with compression.

In accordance with one aspect of the invention, a vertex is created in a graph for each file object. Along side the graph, a vector is created to represent each block in the install partition.

```
    struct Block {
    InstallOperation* reader;
    InstallOperation* writer;
    }
    vector<Block> blocks; // length is the size of the
      install partition
```

The process then goes through each block in each file object. For each block, reader and writer parameters are set for the block's vector.

Next, iterations are performed through the block's array. For each block with a different reader and writer (which are both non-null), an edge (arrow) is created in the graph from the writer to the reader. An edge in the (directed) graph points to a file operation that must complete before the edge's source file operation starts. Thus, this process tries to ensure that if a block is both read and written by different file operations, the block is read before it is written. The edge represents blocks in the graph, so the edge's weight is the number of blocks.

At this point, the result is likely to have a graph with cycles. The cycles should be broken. The cycles may be found using Donald B. Johnson's circuit finding algorithm as set forth in "Finding all the Elementary Circuits of a Directed Graph," SIAM J. Comput., vol.4 no.1, March 1975, the entire disclosure of which is incorporated by reference herein. The cycles may also be found using Tarjan's Algorithm, as set forth in "Tarjan's Strongly Connected Components Algorithm," David Eppstein, Ed., Wikipedia, the entire disclosure of which is incorporated by reference herein. For each cycle, the lowest-weight edge is found and cut. An edge may be cut as follows. First, create a new node that represents an operation of copying some extents to scratch space. Then, make the edge's source node point to the new node. Here, an edge may be made from the cut edge's destination node to the new node to enforce that the new copy operation occurs before the consumer of the copy. Preferably, modify the cut edge's destination node to read from the scratch space rather than from the blocks represented by the edge being cut.

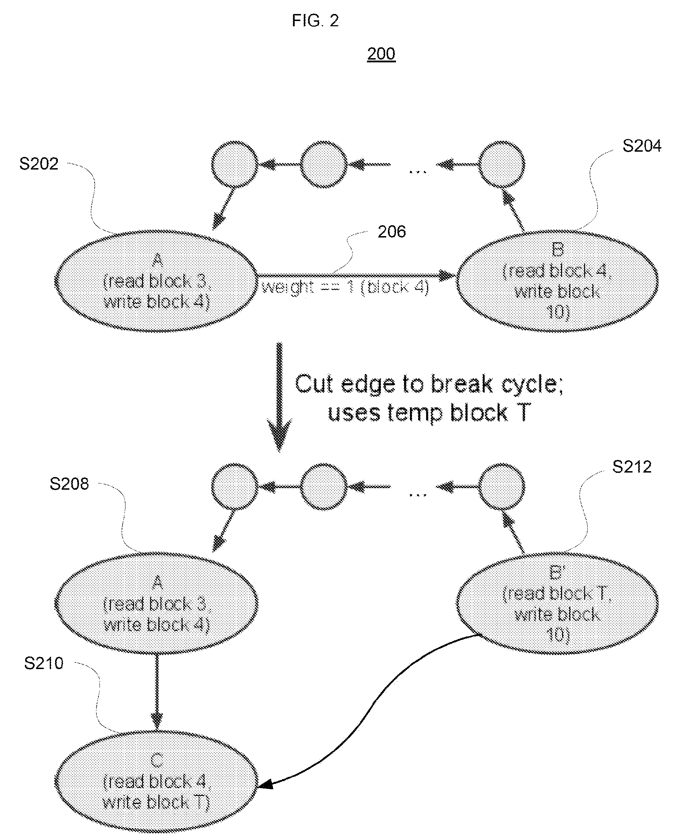

An example of cutting an edge to break a cycle is shown in process 200 of FIG. 2. Arrows indicate that an operation pointed to needs to occur before the operation that's doing the pointing, and needs to happen in that order because the pointing operation will overwrite data needed by the pointee. As shown in this figure, at S202 operation A reads block 3 to write block 4. And at S204 operation B reads block 4 to write block 10. The cycle is broken by cutting the edge (arrow 206) between A and B; this may be done by using temp block T. Thus, as shown, at S208 operation A reads block 3 and writes block 4. At S210, operation C reads block 4 and writes block T. And at S212, operation B' reads block T and writes block 10. Once the cycles are broken, a topological sort may be used to order all the nodes. That covers installation of all file-data blocks.

In one example, it would be possible to pick an edge and cut it, such as B'->C->A->Temp. In this case, the Temp operation would copy the block A to a temp area. B would be modified to B', which would then read from the temp area. However, if a second edge (e.g., C->A) is cut, then the result would be: B'->C->Temp2, and A'->Temp. This would result in two completely independent graphs, and the final order of operations could be arranged as follows:

```
    Temp2 (the client executes this first)
    C
    B'
    Temp
    A' (the client executes this last)
```

However, in this case B' would read the data written by the Temp operation, but Temp occurs after B'. This may happen because the graph transform done when the A->B was cut edge did not specifically state that Temp must occur before B'. In order to avoid this situation, another edge is added to make this explicit. The result is:

```
    A->B->C->A (original)
    cut A->B to obtain:
         B'->C->A->Temp<-B'
```

Then, cut C->A to obtain:

```
         B'->C'->Temp2<-A->Temp<-B'
```

Now, when a final order of operation is chosen based on the graph, the operations will occur in the correct order.

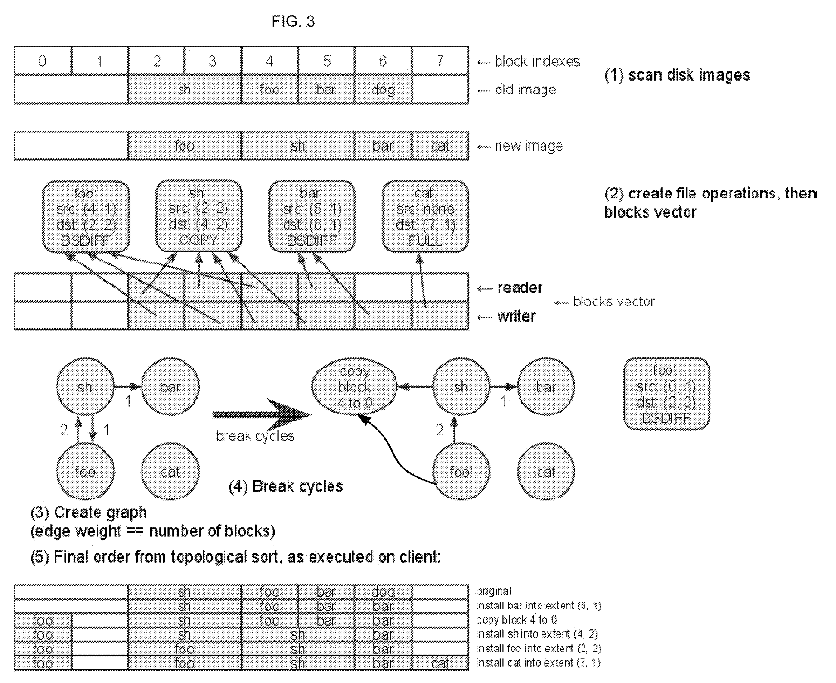

An exemplary process is shown in FIG. 3. At stage 1, disk images are scanned. Block indices (0-7) may be associated with different images (e.g., "sh," "foo," "bar," and "dog"). New images may be associated with the same or different blocks. Thus, "foo" may now be associated with blocks 2-3 instead of block 4. "Sh" may be associated with blocks 4-5 instead of blocks 2-3. "Bar" may be associated with block 6 instead of bock 5. And new image "cat" may be associated with block 7.

At stage 2, file operations are created. This corresponds to a file on the new partition. This is followed by a blocks vector. A blocks vector is an ordered list, where each element includes a file operation for a given block. Each image may have one or more source blocks and one or more destination blocks. Thus, the source block for "foo" is block 4, and its destination blocks are shown as "dst: (2,2)", indicating that the first block is block 2 and there are 2 blocks allocated. This portion also shows how each image may be provided to the client. Thus, foo and bar may be provided using a binary difference algorithm such as bsdiff, sh may merely copied, and cat may be sent in full without compression. Bsdiff is a known algorithm that computes the different between two files.

As shown at stage 3, a graph is created where the edge weight (e.g., 1 or 2) is equal to the number of blocks. At stage 4, the cycles are broken. Desirably, cycle(s) are cut by cutting the least weight edge in each cycle. Thus, in this example, the cycle including the arrow from sh to foo (having a weight of 1) is broken and a modified foo (foo') is obtained. And at stage 5, the final order resulting from the topological sort is shown. This is the order as executed on the client.

After setting the file data, the client will overwrite the non-file-data blocks with a final InstallOperation that unzips the remaining data into all non-file-data blocks. In a typical example, this is about 2 megabytes of data compressed. It may be feasible to perform a delta compression process on this data.

Because the protocol buffer (which lists all operations) occurs at the beginning of the file, the update doesn't need to be saved to disk. It can be applied while streaming from the server. It is desirable to make sure that the update is signed by the OS vendor. The system can begin to apply the update and not mark it bootable until after the delta update signature is verified.

The embodiments presented here have been found to give the best compression ratio in practice. It also allows the operating system vendor employ alternative compression schemes in the future. For instance, one process developed by Google is Courgette, which may replace bsdiff.

Another possible solution is to delta-compress the entire partition. However, bsdiff would be unworkable in this scenario because its memory requirements are too high. During patching, bsdiff needs enough memory to store the original and new files, which may exceed 1 gigabyte. Another delta compression program, Xdelta, uses a sliding window. In testing, this resulted in poor compression (e.g., hundreds of megabytes). A further alternative is to use rdiff, which works by storing only changed blocks in the delta file. It uses a sliding window so that blocks don't need to be aligned. When tested, an rdiff delta of the entire partition was 104 megabytes. This is well above the roughly 10 megabytes that may be used in accordance with the aforementioned procedure.

In the future, it may be possible to use rdiff-(i.e., rsync-) style delta compression at the file level. This could be used alongside bsdiff in the future.

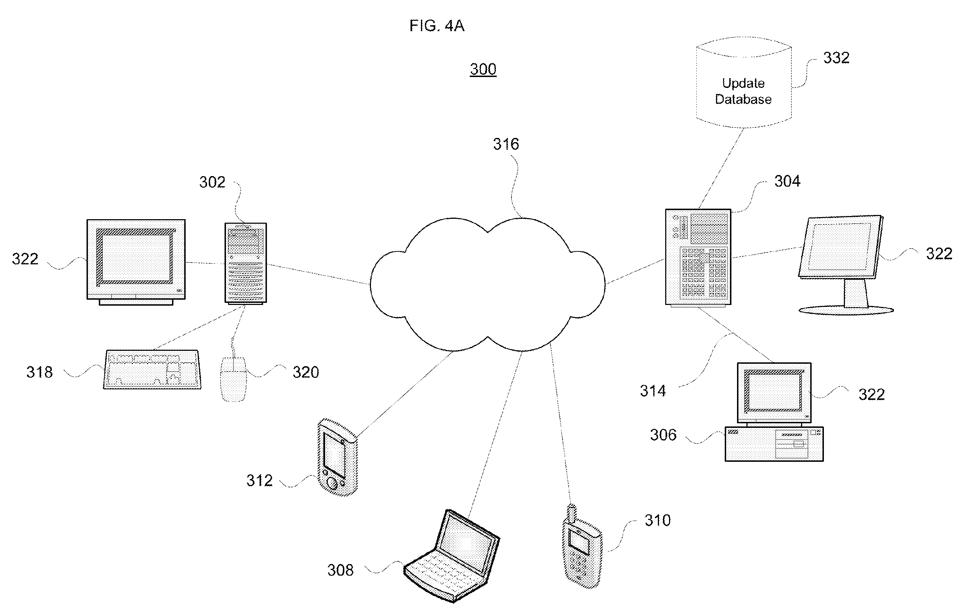

The updating procedures according to aspects of the invention may be implemented with the following exemplary computer system. FIG. 4A presents a schematic diagram of a computer system depicting various computing devices that can be used alone or in a networked configuration in the invention. For example, this figure illustrates a computer network 300 having a plurality of computers 302, 304, 306 and 308 as well as other types of devices such as portable electronic devices such as a mobile phone 310 and a PDA 312. However, the invention is no so limited, and other devices including netbooks and pad-type handheld computers (not shown) may also be used. Such devices may be interconnected via a local or direct connection 314 and/or may be coupled via a communications network 316 such as a LAN, WAN, the Internet, etc., and which may be wired or wireless.

Each device may include, for example, one or more processing devices and have user inputs such as a keyboard 318 and mouse 320 and/or various other types of input devices such as pen-inputs, joysticks, buttons, touch screens, etc., as well as a display 322, which could include, for instance, a CRT, LCD, plasma screen monitor, TV, projector, etc. Each computer 302, 304, 306 and 308 may be a personal computer, server, etc. By way of example only, computers 302 and 306 may be personal computers while computer 304 may be a server and computer 308 may be a laptop.

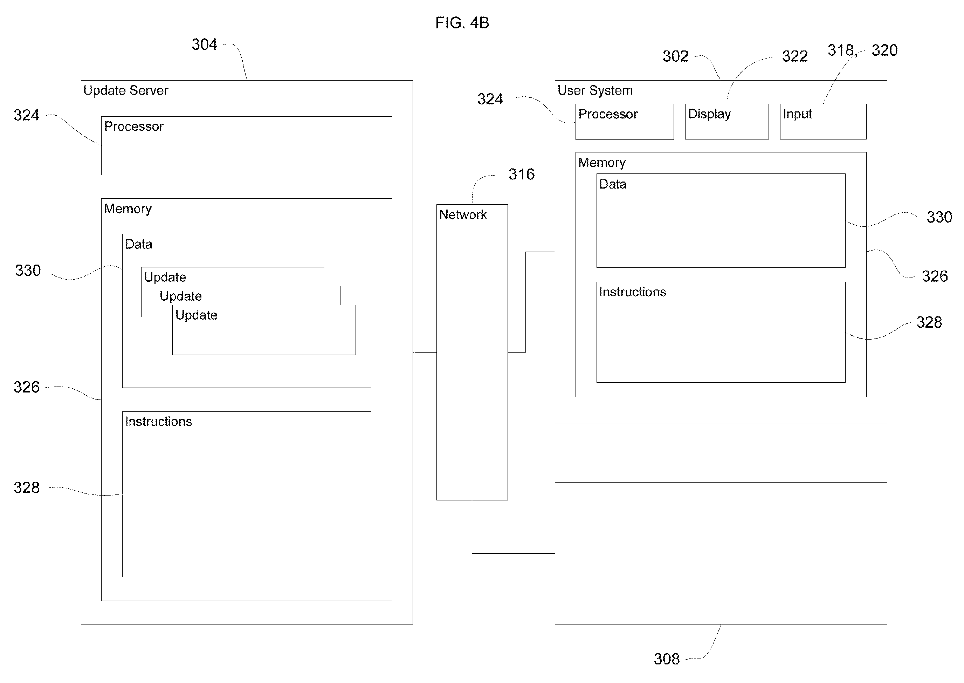

As shown in FIG. 4B, each computer such as computers 302 and 304 contains a processor 324, memory/storage 326 and other components typically present in a computer. For instance, memory/storage 326 stores information accessible by processor 324, including instructions 328 that may be executed by the processor 324 and data 330 that may be retrieved, manipulated or stored by the processor. The instructions 328 at the server may include operations for creating a differential update to be installed by one or more client devices. And the instructions at the client device may include operations for performing the differential update.

The data may include one or more differential updates maintained in a database for service to client devices. The memory/storage may be of any type or any device capable of storing information accessible by the processor, such as a hard-drive, ROM, RAM, CD-ROM, flash memories, write-capable or read-only memories. The processor 324 may comprise any number of well known processors, such as processors from Intel Corporation or Advanced Micro Devices. Alternatively, the processor may be a dedicated controller for executing operations, such as an ASIC or other processing device.

The instructions 328 may comprise any set of instructions to be executed directly (such as machine code) or indirectly (such as scripts) by the processor(s). In that regard, the terms "instructions," "steps" and "programs" may be used interchangeably herein. The instructions may be stored in any computer language or format, such as in object code or modules of source code. The functions, methods and routines of instructions are explained in more detail below.

Data 330 may be retrieved, stored or modified by processor 324 in accordance with the instructions 328. The data may be stored as a collection of data. For instance, although the invention is not limited by any particular data structure, the data may be stored in computer registers, in a relational database as a table having a plurality of different fields and records, in a web page cache, as XML documents, etc.

The data may also be formatted in any computer readable format such as, but not limited to, binary values, ASCII or Unicode. Moreover, the data may include any information sufficient to identify the relevant information, such as descriptive text, proprietary codes, pointers, references to data stored in other memories (including other network locations) or information which is used by a function to calculate the relevant data. Furthermore, a given item may comprise one or more files, a data set stored in a database, a web cache, etc. Depending on the size and content of the data, parts thereof may be stored or otherwise maintained separately.

Although the processor 324 and memory 326 are functionally illustrated in FIG. 4B as being within the same block, it will be understood that the processor and memory may actually comprise multiple processors and memories that may or may not be stored within the same physical housing or location. For example, some or all of the instructions and data may be stored on a removable CD-ROM, DVD-ROM or flash drive, and others within a read-only computer chip. Some or all of the instructions and data may be stored in a location physically remote from, yet still accessible by, the processor. Similarly, the processor may actually comprise a collection of processors which may or may not operate in parallel. Data may be distributed and stored across multiple memories 326 such as hard drives or the like.

In one aspect, server 304 may communicate with one or more client computers 302, 306 and/or 308, as well as devices such as mobile phone 310 and PDA 312. Each client computer or other client device may be configured similarly to the server 304, with a processor, memory and instructions, as well as one or more user input devices 318, 320 and a user output device, such as display 322. Each client computer may be a general purpose computer, intended for use by a person, having all the components normally found in a personal computer such as a central processing unit ("CPU"), display, CD-ROM or DVD drive, hard-drive, mouse, keyboard, touch-sensitive screen, speakers, microphone, modem and/or router (telephone, cable or otherwise) and all of the components used for connecting these elements to one another.

The server 304, user computers and other devices are capable of direct and indirect communication with other computers, such as over network 316. Although only a few computing devices are depicted in FIGS. 4A-B, it should be appreciated that a typical system can include a large number of connected servers and clients, with each different computer being at a different node of the network. The network 316, and intervening nodes, may comprise various configurations and protocols including the Internet, intranets, virtual private networks, wide area networks, local networks, private networks using communication protocols proprietary to one or more companies, Ethernet, WiFi, Bluetooth or TCP/IP.

Communication across the network, including any intervening nodes, may be facilitated by any device capable of transmitting data to and from other computers, such as modems (e.g., dial-up or cable), network interfaces and wireless interfaces. Server 304 may be a web server. Although certain advantages are obtained when information is transmitted or received as noted above, other aspects of the invention are not limited to any particular manner of transmission of information. For example, in some aspects, the information may be sent via a medium such as a disk, tape, CD-ROM, or directly between two computer systems via a dial-up modem. In other aspects, certain information may be transmitted in a non-electronic format and manually entered into the system.

Moreover, computers and user devices in accordance with the systems and methods described herein may comprise any device capable of processing instructions and transmitting data to and from humans and other computers, including network computers lacking local storage capability, PDA's with modems such as PDA 312, Internet-capable wireless phones such as mobile phone 310, netbooks and pad-type handheld computers.

As shown in FIG. 4A, the network 300 may also include an update database 332 for serving differential updates to client devices. The update database may be directly or indirectly coupled to server 304. In an alternative, the update database 332 may be part of or otherwise logically associated with the server 304.

## Claims

1. A method of generating an update for a computer readable operating system, the method comprising:
identifying a version number of a current version of the operating system;
creating, with a processor, an ordered list of operations for updating the current version of the operating system to a new version of the operating system, each operation in the ordered list is applicable to one or more specific data blocks of a partition of a client device (302, 306, 308, 310, 312), and one or more operations in the ordered list of operations are each associated with a respective data blob indicating a chunk of data, the ordered list of operations being created by the processor performing iterations over each regular file on the new version of the operating system to obtain the ordered list of operations such that each operation in the ordered list corresponds to the optimal way to compress the one or more specific data blocks for that operation in order to reduce a size of a differential update file by selecting one of the following operations:
a copy operation where at least one of the data blocks in the partition is to be copied to another block in a new partition of the client device for the new version of the operating system;
a difference operation where at least a given one of the data blocks is read into memory and a difference routine is performing on the at least one given data block using a data blob of the differential update file;
a replace operation where a selected data blob of the differential update file is configured to be written to specified blocks in the new partition; and
a replace with uncompression operation where a compressed data blob is included in the differential update file and is configured to be written to selected specified blocks in the new partition for the new version of the operating system; and
assembling, with the processor, the differential update file including a magic number indicator showing the differential update file is an actual update file, a new version number identifying the new version of the operating system, a protocol buffer including the ordered list of operations, and the respective data blobs.

2. The method of claim 1, wherein each operation in the ordered list of operations is associated with a file object, and the method further comprises:
creating a vertex in a graph for each file object; and
creating a vector representing each data block.

3. The method of claim 2, further comprising:
setting reader and writer parameters for the vector of each block; and
for each data block with a different reader and writer, creating an edge in the graph from the writer to the reader, the edge pointing to a file operation to be completed before a source file operation associated with the edge starts.

4. The method of claim 3, wherein each edge has a weight, and the weight identifies a number of data blocks in the graph associated with that edge.

5. The method of claim 3 or claim 4, wherein if the graph includes cycles, the method further comprises breaking each of the cycles.

6. The method of claim 5, wherein breaking a given one of the cycles includes:
finding a lowest-weight edge associated with the given cycle; and
cutting the lowest-weight edge.

7. The method of claim 6, wherein cutting the lowest-weight edge comprises:
creating a new node representing an operation of copying an extent to a scratch space; and
making the lowest-weight edge's source node point to the new node.

8. The method of claim 7, wherein a new edge is made from a destination node of the lowest-weight edge in order to ensure that a new copy operation occurs before a consumer of the new copy operation.

9. A device for generating an update for a computer readable operating system, the device comprising:
memory for storing differential update information associated with the operating system; and
a processor coupled to the memory, the processor being configured to:
identify a version number of a current version of the operating system;
create, using the differential update information, an ordered list of operations for updating the current version of the operating system to a new version of the operating system, each operation in the ordered list is applicable to one or more specific data blocks of a partition of a client device, and one or more operations in the ordered list of operations are each associated with a respective data blob indicating a chunk of data, the ordered list of operations being created by the processor by performing iterations over each regular file on the new version of the operating system to obtain the ordered list of operations such that each operation in the ordered list corresponds to an optimal way to compress the one or more specific data blocks for that operation in order to reduce a size of a differential update file by selecting one of the following operations:
a copy operation where at least one of the data blocks in the partition is to be copied to another block in a new partition of the client device for the new version of the operating system;
a difference operation where at least a given one of the data blocks is read into memory and a difference routine is performing on the at least one given data block using a data blob of the differential update file;
a replace operation where a selected data blob of the differential update file is configured to be written to specified blocks in the new partition; and
a replace with uncompression operation where a compressed data blob is included in the differential update file and
is configured to be written to selected specified blocks in the new partition for the new version of the operating system;
assemble the differential update file including a magic number indicator showing the differential update file is an actual update file, a new version number identifying the new version of the operating system, a protocol buffer including the ordered list of operations, and the respective data blobs; and
store the differential update file in the memory.

10. The device of claim 9, wherein each operation in the ordered list is associated with a file object, and the processor is further configured to:
create a vertex in a graph for each file object; and
create a vector representing each data block.

11. The device of claim 10, wherein the processor is further configured to:
set reader and writer parameters for the vector of each data block; and
for each block with a different reader and writer, create an edge in the graph from the writer to the reader, the edge pointing to a file operation to be completed before a source file operation associated with the edge starts.

12. The device of claim 11, wherein if the graph includes cycles, the processor is further operable to break each of the cycles.

13. The device of claim 12, wherein breaking a given one of the cycles includes:
finding a lowest-weight edge associated with the given cycle; and
cutting the lowest-weight edge.

## Patentansprüche

1. Verfahren zum Generieren einer Aktualisierung für ein computer-lesbares Betriebssystem, wobei das Verfahren umfasst:
Identifizieren einer Versionsnummer einer derzeitigen Version des Betriebssystems;
Erzeugen, mit einem Prozessor, einer geordneten Liste von Operationen zum Aktualisieren der derzeitigen Version des Betriebssystems auf eine neue Version des Betriebssystems, wobei jede Operation in der geordneten Liste auf einen oder mehrere spezifische Datenblöcke einer Partition einer Clientvorrichtung (302, 306, 308, 310, 312) anwendbar ist, und eine oder mehrere Operationen in der geordneten Liste von Operationen je mit einem entsprechenden Daten-Blob assoziiert sind, das ein Datenstück anzeigt, wobei die geordnete Liste von Operationen von dem Prozessor erzeugt wird, der Iterationen über jeder regulären Datei auf der neuen Version des Betriebssystems ausführt, um die geordnete Liste von Operationen zu erhalten, so dass jede Operation in der geordneten Liste dem optimalen Weg entspricht, den einen oder die mehreren spezifischen Datenblöcke für diese Operation zu komprimieren, um eine Größe einer differentiellen Aktualisierungsdatei durch Auswählen einer der folgenden Operationen zu reduzieren:
eine Kopieroperation wo zumindest einer der Datenblöcke in der Partition zu einem anderen Block in einer neuen Partition der Clientvorrichtung für die neue Version des Betriebssystems zu kopieren ist;
eine Differenzoperation, wo zumindest ein Gegebener der Datenblöcke in einen Speicher gelesen wird und eine Differenzroutine auf dem zumindest einen gegebenen Datenblock unter Verwendung eines Daten-Blob der differentiellen Aktualisierungsdatei ausführt;
eine Ersetzungsoperation, wo ein ausgewähltes Daten-Blob der differentiellen Aktualisierungsdatei dazu konfiguriert ist, in angegebene Blöcke in der neuen Partition geschrieben zu werden; und
eine Operation zur Ersetzung mit Dekomprimierung, wo ein komprimierter Daten-Blob in der differenziellen Aktualisierungsdatei enthalten ist und dazu konfiguriert ist, in ausgewählte spezifizierte Blöcke in der neuen Partition für die neue Version des Betriebssystems geschrieben zu werden; und
Zusammensetzen, mit dem Prozessor, der differenziellen Aktualisierungsdatei, die eine Angabe zu einer magischen Zahl, die zeigt, dass die differenzielle Aktualisierungsdatei eine tatsächliche Aktualisierungsdatei ist, eine neue Versionsnummer, die die neue Version des Betriebssystems identifiziert, einen Protokollpuffer, der die geordnete Liste von Operationen enthält, und die entsprechenden Daten-Blobs enthält.

2. Verfahren nach Anspruch 1, wobei jede Operation in der geordneten Liste von Operationen mit einem Dateiobjekt assoziiert ist, und das Verfahren ferner umfasst:
für jedes Dateiobjekt, Erzeugen eines Knotens in einem Graphen;
Erzeugen eines Vektors, der jeden Datenblock repräsentiert.

3. Verfahren nach Anspruch 2, ferner umfassend:
Setzen von Leser- und Schreiber-Parametern für den Vektor von jedem Block;
für jeden Datenblock mit einem unterschiedlichen Leser und Schreiber, Erzeugen einer Kante in dem Graphen von der Schreiber zu dem Leser, wobei die Kante auf eine Dateioperation zeigt, die zu beenden ist bevor eine Quelldateioperation, die mit der Kante assoziiert ist, startet.

4. Verfahren nach Anspruch 3, wobei jede Karte ein Gewicht hat, und das Gewicht eine Anzahl von Datenblöcken in den Graph identifiziert, die mit der Kante assoziiert sind.

5. Verfahren nach Anspruch 3 oder Anspruch 4, wobei, wenn der Graph Zyklen enthält, das Verfahren ferner Brechen von jedem der Zyklen umfasst.

6. Verfahren nach Anspruch 5, wobei Brechen eines Gegebenen der Zyklen enthält:
Finden einer Kante mit geringstem Gewicht, die mit dem gegebenen Zyklus assoziiert ist; und
Schneiden der Kante mit geringstem Gewicht.

7. Verfahren nach Anspruch 6, wobei Schneiden der Kante mit geringstem Gewicht umfasst:
Erzeugen eines neuen Knotens, der eine Kopieroperation eines Extents in einen Scratch-Raum repräsentiert; und
den Quellknoten der Kante mit geringstem Gewicht auf den neuen Knoten zeigen lassen.

8. Verfahren nach Anspruch 7, wobei eine neue Kante von einem Zielknoten der Kante mit geringstem Gewicht erzeugt wird, um sicherzustellen, dass eine neue Kopieroperation vor einem Verwender der neuen Kopieroperation auftritt.

9. Vorrichtung zum Generieren einer Aktualisierung für eine ein computer-lesbares Betriebssystem, wobei die Vorrichtung umfasst:
Speicher zum Ablegen von differentieller Aktualisierungsinformation, die mit dem Betriebssystem assoziiert ist; und
einen Prozessor, der an den Speicher gekoppelt ist, wobei der Prozessor konfiguriert ist,
eine Versionsnummer einer derzeitigen Version des Betriebssystems zu identifizieren;
unter Verwendung der differentieller Aktualisierungsinformation, eine geordnete Liste, von Operationen zu erzeugen zum Aktualisieren der derzeitigen Version des Betriebssystems auf eine neue Version des Betriebssystems, wobei jede Operation in der geordneten Liste auf einen oder mehrere spezifische Datenblöcke einer Partition einer Clientvorrichtung anwendbar ist, und eine oder mehrere Operationen in der geordneten Liste von Operationen je mit einem entsprechenden Daten-Blob assoziiert sind, das ein Datenstück anzeigt, wobei die geordnete Liste von Operationen von dem Prozessor erzeigt wird durch Ausführen von Iterationen über jede reguläre Datei auf der neuen Version des Betriebssystems, um die geordnete Liste von Operationen zu erhalten, so dass jede Operation in der geordneten Liste einem optimalen Weg entspricht, um den einen oder die mehreren spezifischen Datenblöcke für diese Operation zu komprimieren, um eine Größe einer differentiellen Aktualisierungsdatei durch Auswählen einer der folgenden Operationen zu reduzieren:
eine Kopieroperation, wo zumindest einer der Datenblöcke in der Partition zu einem anderen Block in einer neuen Partition der Clientvorrichtung für die neue Version des Betriebssystems zu kopieren ist;
eine Differenzoperation, wo zumindest ein Gegebener der Datenblöcke in einen Speicher gelesen wird und eine Differenzroutine auf dem zumindest einen gegebenen Datenblock unter Verwendung eines Daten-Blob der differentiellen Aktualisierungsdatei ausführt;
eine Ersetzungsoperation, wo ein ausgewähltes Daten-Blob der differentiellen Aktualisierungsdatei dazu konfiguriert ist, in angegebene Blöcke in der neuen Partition geschrieben zu werden; und
eine Operation zur Ersetzung mit Dekomprimierung, wo ein komprimierter Daten-Blob in der differenziellen Aktualisierungsdatei enthalten ist und dazu konfiguriert ist, in ausgewählte spezifizierte Blöcke in der neuen Partition für die neue Version des Betriebssystems geschrieben zu werden; und
die differenzielle Aktualisierungsdatei zusammenzusetzen, die eine Angabe zu einer magischen Zahl, die zeigt, dass die differenzielle Aktualisierungsdatei eine tatsächliche Aktualisierungsdatei ist, eine neue Versionsnummer, die die neue Version des Betriebssystems identifiziert, einen Protokollpuffer, der die geordnete Liste von Operationen enthält, und die entsprechenden Daten-Blobs enthält; und
die differenzielle Aktualisierungsdatei in dem Speicher abzulegen.

10. Vorrichtung nach Anspruch 9, wobei jede Operation in der geordneten Liste von Operationen mit einem Dateiobjekt assoziiert ist, und der Prozessor ferner konfiguriert ist,
für jedes Dateiobjekt einen Knoten in einem Graphen zu erzeugen; und einen Vektor, der jeden Datenblock repräsentiert, zu erzeugen.

11. Vorrichtung nach Anspruch 10, wobei der Prozessor ferner konfiguriert ist,
Leser- und Schreiber- Parameter für den Vektor von jedem Datenblock zu setzen;
für jeden Datenblock mit einem unterschiedlichen Leser und Schreiber, eine Kante in dem Graphen von dem Schreiber zu dem Leser zu erzeugen, wobei die Kante auf eine Dateioperation zeigt, die zu beenden ist, bevor eine Quelldateioperation, die mit der Kante assoziiert ist, startet.

12. Vorrichtung nach Anspruch 11, wobei, wenn der Graph Zyklen enthält, der Prozessor ferner betreibbar ist, jeden der Zyklen zu brechen.

13. Vorrichtung nach Anspruch 12, wobei Brechen eines Gegebenen der Zyklen enthält:
Finden eine Kante mit geringstem Gewicht, die mit dem gegebenen Zyklus assoziiert ist; und
Schneiden der Kante mit geringstem Gewicht.

## Revendications

1. Un procédé de génération d'une mise à jour pour un système d'exploitation lisible par un ordinateur, le procédé comprenant :
le fait d'identifier un numéro de version de la version actuelle du système d'exploitation ;
le fait de créer, avec un processeur, une liste ordonnée d'opérations de mise à jour de la version actuelle du système d'exploitation vers une nouvelle version du système d'exploitation, chaque opération dans la liste ordonnée étant applicable à un ou plusieurs blocs de données spécifiques d'une partition d'un dispositif client (302, 306, 308, 310, 312), et une ou plusieurs opérations dans la liste ordonnée d'opérations sont associées chacune à un blob de données respectif indiquant un paquet de données, la liste ordonnée d'opérations étant créée par le processeur exécutant des itérations sur chaque fichier régulier de la nouvelle version du système d'exploitation pour obtenir la liste ordonnée d'opérations de telle sorte que chaque opération dans la liste ordonnée corresponde à la meilleure façon de comprimer lesdits un ou plusieurs blocs de données spécifiques pour cette opération afin de réduire la taille d'un fichier différentiel de mise à jour, en sélectionnant l'une des opérations suivantes :
une opération de copie, au cours de laquelle au moins l'un des blocs de données dans la partition est destiné à être copié vers un autre bloc dans une nouvelle partition du dispositif client pour la nouvelle version du système d'exploitation ;
une opération de différence, au cours de laquelle au moins un bloc considéré parmi les blocs de données est lu dans la mémoire et une routine de différence s'effectue sur ledit au moins un bloc de données considéré en utilisant un blob de données du fichier différentiel de mise à jour ;
une opération de remplacement, au cours de laquelle un blob de données sélectionné du fichier différentiel de mise à jour est configuré pour être écrit dans des blocs spécifiés dans la nouvelle partition ; et
un remplacement avec une opération de décompression, au cours de laquelle un blob de données compressées est inclus dans le fichier différentiel de mise à jour et est configuré pour être écrit dans des blocs spécifiés sélectionnés dans la nouvelle partition pour la nouvelle version du système d'exploitation ; et
assembler, avec le processeur, le fichier différentiel de mise à jour incluant un indicateur de nombre magique montrant que le fichier différentiel de mise à jour est un fichier effectif de mise à jour, un nouveau numéro de version identifiant la nouvelle version du système d'exploitation, un tampon de protocole incluant la liste ordonnée d'opérations, et les blobs de données respectifs.

2. Le procédé selon la revendication 1, dans lequel chaque opération dans la liste ordonnée d'opérations est associée à un objet de fichier, et le procédé comprend en outre :
le fait de créer un sommet dans un graphique pour chaque objet de fichier ; et
le fait de créer un vecteur représentant chaque bloc de données.

3. Le procédé selon la revendication 2, comprenant en outre :
le fait de déterminer des paramètres de scripteur et de lecteur pour le vecteur de chaque bloc ; et
pour chaque paquet de données ayant un autre lecteur et scripteur, le fait de créer une arête dans le graphique depuis le scripteur vers le lecteur, l'arête pointant vers une opération de fichier devant être accomplie avant qu'une opération de fichier source associé à l'arête commence.

4. Le procédé selon la revendication 3, dans lequel chaque arête a un poids, et le poids identifie un certain nombre de blocs de données dans le graphique associé à cette arête.

5. Le procédé selon la revendication 3 ou la revendication 4, dans lequel, si le graphique comprend des cycles, le procédé comprend en outre la rupture de chacun des cycles.

6. Le procédé selon la revendication 5, dans lequel la rupture d'un cycle considéré parmi les cycles comprend :
le fait de trouver une arête de poids le plus faible associé au cycle donné ; et
le fait de couper l'arête de poids le plus faible.

7. Le procédé selon la revendication 6, dans lequel la coupe de l'arête de poids le plus faible comprend :
le fait de créer un nouveau noeud représentant une opération de copie d'une mesure dans un espace de travail ; et
le fait de faire le point de noeud de la source de l'arête de poids plus faible vers le nouveau noeud.

8. Le procédé selon la revendication 7, dans lequel une nouvelle arête est réalisée à partir d'un noeud de destination de l'arête de poids le plus faible afin de s'assurer qu'une nouvelle opération de copie se produit avant un consommateur de la nouvelle opération de copie.

9. Un dispositif pour la génération d'une mise à jour pour un système d'exploitation lisible par un ordinateur, le dispositif comprenant :
une mémoire pour mémoriser des informations de mise à jour différentielles associées au système d'exploitation ; et
un processeur couplé à la mémoire, le processeur étant configuré pour :
le fait d'identifier un numéro de version d'une version actuelle du système d'exploitation ;
le fait de créer, en utilisant les informations de mise à jour différentielles, une liste ordonnée d'opérations pour mettre à jour la version actuelle du système d'exploitation vers une nouvelle version du système d'exploitation, chaque opération dans la liste ordonnée étant applicable à un ou plusieurs blocs spécifiques de données d'une partition d'un dispositif client, et une ou plusieurs opérations dans la liste ordonnée d'opérations étant chacune associées à un blob de données respectif indiquant un paquet de données, la liste ordonnée d'opérations étant créée par le processeur en effectuant des itérations sur chaque fichier régulier sur la nouvelle version du système d'exploitation afin d'obtenir la liste ordonnée d'opérations de telle sorte que chacune des opérations dans la liste ordonnée corresponde à une manière optimale pour comprimer lesdits un ou plusieurs blocs de données spécifiques pour cette opération afin de réduire la taille d'un fichier différentiel de mise à jour en sélectionnant une des opérations suivantes :
une opération de copie, au cours de laquelle au moins l'un des blocs de données dans la partition est destiné à être copié vers un autre bloc dans une nouvelle partition du dispositif client pour la nouvelle version du système d'exploitation ;
une opération de différence, au cours de laquelle au moins un bloc de donné considéré parmi les blocs de données est lu dans la mémoire et une routine de différence s'effectue sur ledit au moins un bloc de données considéré en utilisant un blob de données du fichier différentiel de mise à jour ;
une opération de remplacement, au cours de laquelle un blob de données sélectionné du fichier différentiel de mise à jour est configuré pour être écrit vers des blocs spécifiés dans la nouvelle partition ; et
un remplacement avec une opération de décompression, dans lequel un blob de données comprimé est inclus dans le fichier différentiel de mise à jour et est configuré pour être écrit vers des blocs spécifiés sélectionnés dans la nouvelle partition pour la nouvelle version du système d'exploitation ;
le fait d'assembler le fichier différentiel de mise à jour incluant un indicateur de nombre magique montrant que le fichier différentiel de mise à jour est un fichier effectif de mise à jour, un nouveau numéro de version identifiant la nouvelle version du système d'exploitation, un tampon de protocole incluant la liste ordonnée d'opérations, et les blobs de données respectives ; et
stocker le fichier différentiel de mise à jour dans la mémoire.

10. Le dispositif selon la revendication 9, dans lequel chaque opération dans la liste ordonnée est associée à un objet de fichier, et le processeur est en outre configuré pour :
créer un sommet dans un graphique pour chaque objet de fichier ; et
créer un vecteur représentant chaque bloc de données.

11. Le dispositif selon la revendication 10, dans lequel le processeur est en outre configuré pour :
définir de paramètres de scripteur et de lecteur pour le vecteur de chaque bloc de données ; et
pour chaque bloc ayant un autre lecteur et scripteur, créer une arête dans le graphique depuis le scripteur vers le lecteur, l'arête pointant vers une opération de fichier devant être accomplie avant qu'une opération de fichier source associée à l'arête commence.

12. Le dispositif selon la revendication 11, dans lequel, si le graphique comprend des cycles, le processeur est en outre utilisable pour rompre chacun des cycles.

13. Le dispositif selon la revendication 12, dans lequel la rupture d'un cycle donné parmi l'un des cycles comprend :
le fait de trouver une arête de poids le plus faible associée au cycle donné ; et
le fait de couper l'arête de poids le plus faible.
